# EUROPÄISCHE PATENTSCHRIFT

(11) **EP 2 016 377 B1**
(45) Veröffentlichungstag und Bekanntmachung des Hinweises auf die Patenterteilung: **08.11.2017**
(21) Anmeldenummer: 07786717.4
(22) Anmeldetag: 25.04.2007
(51) Int. Cl.: G01F 23/00

(54) **VORRICHTUNG ZUR BESTIMMUNG UND/ODER ÜBERWACHUNG EINER PROZESSGRÖSSE**
APPARATUS FOR DETERMINING AND/OR MONITORING A PROCESS VARIABLE
DISPOSITIF POUR LA DÉTERMINATION ET/OU LE CONTRÔLE D'UNE GRANDEUR DE PROCESSUS

(30) Priorität: 28.04.2006 DE 102006020342
(43) Veröffentlichungstag der Anmeldung: 21.01.2009
(73) Patentinhaber: Endress+Hauser GmbH+Co. KG, 79689 Maulburg (DE)
(72) Erfinder: FERRARO, Franco, 79739 Schwörstadt (DE); UPPENKAMP, Kaj, 79664 Wehr (DE); DREYER, Volker, 79541 Lörrach (DE); GRITTKE, Udo, 79585 Steinen (DE)
(74) Vertreter: Andres, Angelika Maria
(86) Internationale Anmeldenummer: PCT/EP2007/054053
(87) Internationale Veröffentlichungsnummer: WO 2007/125067

(56) Entgegenhaltungen:
- EP-A- 0 892 249
- WO-A-01/18502
- WO-A-2004/017025
- DE-A1- 4 239 954

## Beschreibung

Die Erfindung bezieht sich auf eine Vorrichtung zur Bestimmung und/oder Überwachung mindestens einer Prozessgröße eines Mediums, mit mindestens einer Sensoreinheit zur Erfassung der Prozessgröße, wobei die Sensoreinheit Messsignale erzeugt, mit mindestens einer Elektronikeinheit zur Steuerung der Sensoreinheit, wobei die Elektronikeinheit mindestens einen Mikroprozessor aufweist, und mit mindestens einer Speichereinheit, welche der Sensoreinheit zugeordnet ist, und in welcher Steuerdaten hinterlegbar sind, wobei die Steuerdaten spezifisch auf die Sensoreinheit bezogen sind und von der Elektronikeinheit auslesbar sind. Bei der Prozessgröße handelt es sich beispielsweise um den Füllstand, die Dichte, die Viskosität, die Temperatur, den Durchfluss, den pH-Wert oder den Druck. Das Medium ist beispielsweise eine Flüssigkeit, ein Schüttgut oder ein Gas.

In der Offenlegungsschrift WO 01/18502 A1 ist eine Messvorrichtung beschrieben, in welcher ein Füllstand über das Laufzeitverfahren gemessen wird. D.h. ein Messsignal wird in Richtung der Oberfläche eines Mediums ausgestrahlt und nach der Wechselwirkung mit dem Medium wieder empfangen. Aus der Zeitdifferenz lässt sich der Füllstand ermitteln. Als Messsignale eignen sich Mikrowellensignale, die entweder frei abgestrahlt oder an einem elektrischen Leiter geführt werden, oder auch Ultraschallwellensignale. Je nach der Art der Messsignale ist jeweils eine eigene Sensoreinheit erforderlich. Gleichzeitig ist jedoch die Auswertung bei Sensoren nach dem Laufzeitverfahren jeweils identisch. Daher wird im Messgerät der Offenlegungsschrift eine Auswerteeinheit mit unterschiedlichen Sensoreinheiten kombiniert, indem die den unterschiedlichen Sensortypen gemeinen Einheiten gebündelt und die spezifischen Bauteile mit den Sensoreinheiten verbunden werden. Es werden also praktisch Auswerteeinheiten von unterschiedlichen Messgeräten zu einer Auswerteeinheit zusammengefasst, die mit unterschiedlichen Sensoreinheiten verbindbar ist.

Für das Erkennen eines Grenzstandes eines Mediums sind sog. Schwinggabeln bekannt. Die Schwingungen dieser Gabeln werden in Hinsicht auf Frequenz, Amplitude oder Phase ausgewertet. Ausgenutzt wird, dass beispielsweise die Schwingfrequenz abnimmt, wenn das Medium die Gabel bedeckt. Um das Erreichen eines Grenzstandes zuverlässig zu erkennen, muss dafür die sog. Luftfrequenz bekannt sein, also die Frequenz, mit welcher die Gabel frei und unbedeckt schwingt. Diese Resonanzfrequenz ist jedoch abhängig von der Ausgestaltung der Gabel, kann also zwischen den einzelnen Gabeln einer Fertigung unterschiedlich sein. Um dennoch zuverlässig schalten zu können, werden daher die Messgeräte mit einem Kennwiderstand oder einem beliebigen Kennelement, z.B. einem EEPROM ausgerüstet, in welchem beispielsweise die Schwinggabelfrequenz abgelegt ist. Siehe beispielsweise die Dokumente DE 42 32 659 oder DE 100 56 353 A1.

Die allgemeine technische Entwicklung geht immer weiter in Richtung Modularisierung und Plattformbildung. Dabei ist jedoch immer noch darauf zu achten, dass eine Vielzahl von Messgeräten auch der Sicherheit einer Prozessanlage dient, d.h. es muss gewährleistet werden, dass solche Messgeräte auch sicher und zuverlässig funktionieren. Insbesondere ist bei unterschiedlichen Modulen darauf zu achten, dass auch die richtigen Komponenten miteinander verbunden sind. Dies gilt umso mehr, wenn es sich um Softwareprogramme oder bestandteile handelt.

Die Aufgabe der Erfindung besteht daher darin, ein modulares Messgerät vorzuschlagen, welches ein hohes Maß an Sicherheit der Funktion aufweist.

Die Aufgabe löst die Erfindung dadurch, dass der Mikroprozessor der Elektronikeinheit derartig ausgestaltet ist, dass der Mikroprozessor in einem inaktivierten Zustand nur Basisfunktionalitäten ausführt, und dass der Mikroprozessor in einem aktivierten Zustand die Sensoreinheit steuert, wobei der Mikroprozessor aus dem inaktivierten Zustand in den aktivierten Zustand übergeht, indem der Mikroprozessor die Steuerdaten aus der Speichereinheit übernimmt. Das erfindungsgemäße Messgerät verfügt somit über eine Sensoreinheit, der eine Speichereinheit zugeordnet ist. Die zuverlässig funktionieren. Insbesondere ist bei unterschiedlichen Modulen darauf zu achten, dass auch die richtigen Komponenten miteinander verbunden sind. Dies gilt umso mehr, wenn es sich um Softwareprogramme oder -bestandteile handelt.

Die Aufgabe der Erfindung besteht daher darin, ein modulares Messgerät vorzuschlagen, welches ein hohes Maß an Sicherheit der Funktion aufweist.

Die Aufgabe löst die Erfindung dadurch, dass der Mikroprozessor der Elektronikeinheit derartig ausgestaltet ist, dass der Mikroprozessor in einem inaktivierten Zustand nur Basisfunktionalitäten ausführt, und dass der Mikroprozessor in einem aktivierten Zustand die Sensoreinheit steuert, wobei der Mikroprozessor aus dem inaktivierten Zustand in den aktivierten Zustand übergeht, indem der Mikroprozessor die Steuerdaten aus der Speichereinheit übernimmt. Das erfindungsgemäße Messgerät verfügt somit über eine Sensoreinheit, der eine Speichereinheit zugeordnet ist. Die Steuerung oder allgemein die Bedienung der Sensoreinheit wird von einer Elektronikeinheit vorgenommen. In der Elektronikeinheit befindet sich ein Mikroprozessor, welcher die eigentliche Steuerung in der Elektronikeinheit übernimmt. Der Mikroprozessor steuert die Sensoreinheit nur dann, wenn er durch das Laden der Daten aus der Speichereinheit aktiviert worden ist und die passenden Daten bzw. Programme oder Programmteile für das ordnungsgemäße Funktionieren aufweist. Diese Aktivierung - dabei bezieht sich die Aktivierung auf den Messvorgang, d.h. auf den Betrieb der Sensoreinheit - kann dabei bei der ersten Inbetriebnahme des Messgerätes erfolgen oder beispielsweise nach jeder ggf. erneuten Energieversorgung des Messgerätes oder in Folge eines speziellen Ansteuerbefehls.

Eine Ausgestaltung sieht vor, dass die Elektronikeinheit derartig ausgestaltet ist, dass von der Elektronikeinheit mindestens zwei unterschiedliche Sensoreinheiten steuerbar sind, wobei sich die Sensoreinheiten darin unterscheiden, dass sie unterschiedliche Prozessgrößen messen und/oder unterschiedliche Messprinzipien anwenden. In dieser Ausgestaltung ist die Elektronikeinheit also mit unterschiedlichen Sensoreinheiten koppelbar. Dies bringt es mit sich, dass die Elektronikeinheit auch die jeweils dafür erforderlichen Funktionalitäten und Möglichkeiten aufweist. Bedingt durch die Daten der der jeweiligen Sensoreinheit zugeordneten Speichereinheit arbeitet dann der Mikroprozessor der Elektronikeinheit so, dass die Sensoreinheit passend angesteuert wird oder die Ausgangssignale passend ausgewertet werden. Die Erfindung erlaubt es somit, dass jede Sensoreinheit die für ihre Steuerung oder Auswertung erforderlichen Programmparameter oder Programme selbst mitbringt. In einer Ausgestaltung handelt es sich bei den Sensoreinheiten jeweils um eine mechanisch schwingfähige Einheit, also beispielsweise um eine Schwinggabel oder einen Einstab, mit einer zugehörigen Wandeleinheit zwischen mechanischer Schwingung und elektrischem Signal (z.B. ein piezoelektrisches Element). Die Sensoreinheiten unterscheiden sich jedoch in ihrer Anwendung, welche sich entweder auf Flüssigkeiten oder auf Schüttgüter bezieht. Bei Flüssigkeiten wird oft die Schwingungsfrequenz zur Bestimmung und/oder Überwachung des Füllstandes angewendet, bei Schüttgütern die Amplitude. Entsprechend unterschiedlich sind Anregung und Auswertung der Signale. Ein weiteres Unterscheidungsmerkmal besteht in der Art der Anwendung, wobei beispielsweise eine Phase zwischen dem Empfangs- und Anregesignal eingestellt wird, welche bei Flüssigkeiten die Schaumdetektion erlaubt oder Schaum ausblendet. D.h. die Sensoreinheiten werden für unterschiedliche Empfindlichkeiten angesteuert und ausgestaltet. Weiterhin kann eine Schwingeinheit für die Überwachung des Füllstandes, eine andere jedoch für eine Messung der Dichte verwendet werden. Es wird also von den Sensoreinheiten das gleiche Messprinzip verwendet, die Anwendung ist jedoch eine unterschiedliche, die sich entweder auf unterschiedliche Medien oder unterschiedliche Prozessgrößen bezieht. In einer weiteren Ausgestaltung wird in einer Sensoreinheit ebenfalls das vibronische Messprinzip umgesetzt, bei einer zweiten Sensoreinheit handelt es sich jedoch um eine kapazitive Messeinheit. Bei beiden Sensoreinheiten wird diese jeweils mit einem elektrischen Signal, einer Wechselspannung beaufschlagt, welches sich jedoch insbesondere in der Frequenz unterscheidet. Von der Sensoreinheit wird jeweils ein Messsignal empfangen, welches im einen Fall die Information über die mechanischen Schwingungen und im anderen Fall über die Kapazität der Anordnung aus Sondeneinheit und Wandung des Behälters oder einer zweiten Sondeneinheit und dem Medium als Dielektrikum. Die Daten der Speichereinheit geben somit Auskunft über die unterschiedlichen Amplituden-, Frequenzen- und/oder Phasenbereiche bzw. über die jeweilige Signalform des Anregesignals, welche bei den jeweiligen Sensoreinheiten zur Anwendung kommen. Je mehr an Ansteuerung der Sensoreinheit bzw. Auswertung der Daten auf digitalem Wege verläuft, desto mehr Sensortypen lassen sich zusammenfassen.

Eine Ausgestaltung beinhaltet, dass die Elektronikeinheit derartig ausgestaltet ist, dass in ihr Steuerprogramme für unterschiedliche Sensoreinheiten und/oder unterschiedliche Messprinzipien hinterlegt sind, und dass die Steuerdaten die Aktivierung des zur jeweiligen Sensoreinheit passenden Steuerprogramms bewirken. In dieser Ausgestaltung sind in der Elektronikeinheit die erforderlichen Steuerungsprogramm für unterschiedliche Sensoreinheiten hinterlegt, d.h. die Elektronikeinheit ist prinzipiell für unterschiedliche Sensortypen geeignet. Die Daten der Speichereinheit bewirken, dass jeweils das passende Programm ausgeführt wird.

Eine Ausgestaltung sieht vor, dass die Steuerdaten ein Steuerprogramm umfassen, welches spezifisch für die Steuerung der Sensoreinheit ist, oder dass die Steuerdaten die Programmteile eines Steuerprogramms umfassen, die spezifisch für die Sensoreinheit sind. In dieser Ausgestaltung befindet sich das vollständige Steuerprogramm oder sensorspezifische Bestandteile in der Speichereinheit. Damit wird dann entweder das gesamte Steuerprogramm oder es werden die spezifischen Bestandteile in die Elektronikeinheit zur Steuerung der Sensoreinheit geladen.

Eine Ausgestaltung beinhaltet, dass die Elektronikeinheit derartig ausgestaltet ist, dass die Elektronikeinheit nach einem Erhalten eines Aktivierungsbefehl und/oder nach der Herstellung einer Verbindung zwischen der Elektronikeinheit und der Sensoreinheit die Steuerdaten aus der Speichereinheit ausliest. In einer Ausgestaltung ist in der Speichereinheit eine Kennung oder Codierung hinterlegt, welche bei einem Wiederkehren der Spannung, d.h. beim Einschalten oder wieder Einschalten vom Mikroprozessor detektiert wird. Befindet sich das jeweilige Steuerprogramm oder die erforderlichen Daten noch nicht im Mikroprozessor, so wird ein Laden des Programms bzw. der Daten durchgeführt.

Eine Ausgestaltung sieht vor, dass der Mikroprozessor der Elektronikeinheit mindestens eine Schnittstelle für einen Update des Steuerprogramms aufweist.

Eine Ausgestaltung beinhaltet, dass die Speichereinheit mindestens eine Kodierung beinhaltet, die eine spezifische Zuordnung der Speichereinheit zur Sensoreinheit erlaubt.

Die Erfindung wird anhand der nachfolgenden Zeichnung näher erläutert. Es zeigt:

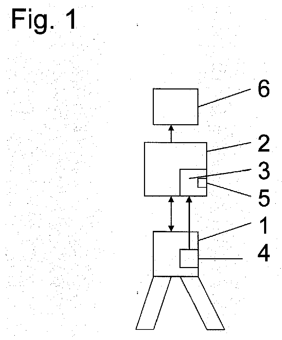

Fig. 1: eine schematische Darstellung einer erfindungsgemäßen Messvorrichtung.

In der Fig. 1 ist ein erfindungsgemäßes Messgerät dargestellt. Bei der Sensoreinheit 1 handelt es sich hier um ein Ausgestaltung für ein vibronisches Messgerät, d.h. die beiden Schwingeinheiten der Schwinggabel sind an einer Membran befestigt, welche zu mechanischen Schwingungen angeregt wird. Die Kenngrößen der Schwingungen wie Frequenz, Amplitude und Phase erlauben die Bestimmung von solchen Prozessgrößen wie Füllstand, Dichte oder Viskosität. Die Sensoreinheit 1 ist mit einer Elektronikeinheit 2 verbunden, welche die Sensoreinheit 1 mit einer elektrischen Wechselspannung beaufschlagt, und welche wiederum eine Wechselspannung empfängt, welche sich beispielsweise über ein piezo-elektrisches Element aus den Schwingungen der Membran bzw. der beiden Gabelzinken ergibt. Diese Wechselspannung wird dann in der Elektronikeinheit 2 in Bezug auf die erforderlichen Kenngrößen ausgewertet, phasenverschoben und verstärkt wieder der Sensoreinheit 1 zugeführt.

Die Elektronikeinheit 2 wird dabei durch einen Mikroprozessor 3 gesteuert, der beispielsweise die erforderliche, einzustellende Phase für das Anregesignal vorgibt und die auch die Art der Auswertung vorgibt. Beispielsweise wird bei Flüssigkeiten die Frequenz und bei Schüttgütern die Amplitude der Schwingungen ausgewertet. Für diese Anwendung unterscheiden sich meist auch die Sensoreinheiten 1 in Bezug auf ihre Ausführung, wobei Schwingeinheiten für Schüttgüter meist größer und robuster ausgeführt sind als für Flüssigkeiten. Welcher Art die Auswertung ist oder welche Phase einzustellen ist, ist hier in der Speichereinheit 4 hinterlegt, welche fest mit der Sensoreinheit 2 verbunden ist. Bei der Speichereinheit 4 handelt es sich dabei um einen Datenspeicher im klassischen Sinne oder auch um einen Mikroprozessor. Die Sensoreinheit 2 gibt die notwendigen Daten bzw. in einer weiteren Ausgestaltung das ganze Steuerprogramm oder die für die spezielle Sensoreinheit 2 erforderlichen Programmteile an den Mikroprozessor 3. D.h. über die Speichereinheit 2 wird aus einer allgemeinen Elektronikeinheit 2 eine für die Sensoreinheit 2 spezifische und passende Einheit. Da die Sensoreinheit 2 überdies direkt mit der Speichereinheit 4 und somit mit ihren eigenen Daten verbunden ist, ist sichergestellt, dass stets die richtige Bedienung der Sensoreinheit 2 erfolgt.

Die Elektronikeinheit 2 ist überdies derartig ausgestaltet, dass auch andere Sensoreinheiten 1, welche sich von einander in der Ausgestaltung (z.B. Schwinggabel für Flüssigkeit oder für Schüttgut oder ein Einstab anstelle der Gabel) oder im verwendeten Messprinzip unterscheiden, angeschlossen und betrieben werden können. Somit ist es zum einen möglich, mit einer Elektronikeinheit 2 unterschiedliche Messgeräte mit jeweils unterschiedlichen Sensoreinheiten 1 zu konzipieren. Zum anderen kann auch die Elektronikeinheit 2 getauscht werden, ohne dass das gesamte Messgerät z.B. ausgebaut werden muss, d.h. die Sensoreinheit 1 kann beispielsweise im eingebauten Zustand im Behälter verbleiben und auf der dem Prozess abgewandten Seite wird nur die Elektronik ausgetauscht. Die wesentlichen Daten verbleiben dabei bei der Sensoreinheit 1. Da weiterhin jede Sensoreinheit 1 ihr Steuerprogramm oder die relevanten und spezifischen Teile bei sich trägt, ist auch sichergestellt, dass die Sensoreinheit 1 mit dem richtigen und zu ihr passenden Verfahren betrieben wird.

Die Messdaten bzw. die ausgewerteten Daten, d.h. die bestimmten Prozessgrößen werden hier direkt am Messort über eine Anzeigeeinheit 6, also über ein Display dargestellt. Die erforderlichen Darstellungsdaten, z.B. die Graphiktreiber lassen sich ebenfalls in der Speichereinheit 4 hinterlegen.

Weiterhin ist hier auch eine Schnittstelle 5 vorgesehen, über welche ein Update der Software möglich ist. Ein Update der Steuerdaten in der Sensoreinheit 1 lässt sich beispielsweise über einen Zugriff auf die Speichereinheit 4 realisieren.

Das erfindungsgemäße Messgerät zeichnet sich somit dadurch aus, dass beispielsweise eine Sensoreinheit 1 mit unterschiedlichen Elektronikeinheiten 2 verbindbar ist, und dass die einzelnen Elektronikeinheiten 2 jeweils die für die Steuerung der Sensoreinheit 1 relevanten Programme oder Programmteile oder Programmdaten aus der Speichereinheit 4 der Sensoreinheit auslesen. Somit ist beispielsweise sehr leicht ein Austausch der Elektronikeinheit 2 möglich, ohne die Sensoreinheit 1 aus dem Prozess entfernen zu müssen, und überdies ist sichergestellt, dass die Sensoreinheit 1 mit dem richtigen Programm betrieben wird. Weiterhin können an eine Elektronikeinheit 2 unterschiedliche Sensoreinheiten 1 angeschlossen werden, und auch hier ist durch die Erfindung stets Sicherheit in der Anwendung gegeben.

### Bezugszeichenliste

**Tabelle 1**

| | |
|---|---|
| 1 | Sensoreinheit |
| 2 | Elektronikeinheit |
| 3 | Mikroprozessor |
| 4 | Speichereinheit |
| 5 | Schnittstelle |
| 6 | Anzeigeeinheit |

## Patentansprüche

1. Modulare Vorrichtung zur Bestimmung und/oder Überwachung mindestens einer Prozessgröße eines Mediums,
mit mindestens einer Sensoreinheit (1) zur Erfassung der Prozessgröße,
wobei die Sensoreinheit (1) Messsignale erzeugt,
mit mindestens einer Elektronikeinheit (2) zur Steuerung der Sensoreinheit (1), wobei die Elektronikeinheit (2) mindestens einen Mikroprozessor aufweist,
und
mit mindestens einer Speichereinheit (4), welche der Sensoreinheit (1) zugeordnet ist, und in welcher Steuerdaten hinterlegbar sind,
**dadurch gekennzeichnet,**
**dass** die Steuerdaten spezifisch auf die Sensoreinheit (1) bezogen sind und von der Elektronikeinheit (2) auslesbar sind,
**dass** der Mikroprozessor (3) der Elektronikeinheit (2) in einem inaktivierten Zustand nur Basisfunktionalitäten ausführt, welche nicht die Steuerung der Sensoreinheit (1) betreffen
und
**dass** der Mikroprozessor (3) in einem aktivierten Zustand die Sensoreinheit (1) steuert,
wobei der Mikroprozessor (3) aus dem inaktivierten Zustand in den aktivierten Zustand übergeht, indem der Mikroprozessor (3) die Steuerdaten aus der Speichereinheit (4) übernimmt.

2. Vorrichtung nach Anspruch 1,
**dadurch gekennzeichnet,**
**dass** die Elektronikeinheit (2) derartig ausgestaltet ist, dass von der Elektronikeinheit (2) mindestens zwei unterschiedliche Sensoreinheiten (1) steuerbar sind,
wobei sich die Sensoreinheiten (1) darin unterscheiden, dass sie unterschiedliche Prozessgrößen messen und/oder unterschiedliche Messprinzipien anwenden.

3. Vorrichtung nach Anspruch 1 oder 2,
**dadurch gekennzeichnet,**
**dass** die Elektronikeinheit (2) derartig ausgestaltet ist, dass in ihr Steuerprogramme für unterschiedliche Sensoreinheiten (1) und/oder unterschiedliche Messprinzipien hinterlegt sind,
und
**dass** die Steuerdaten die Aktivierung des zur jeweiligen Sensoreinheit (1) passenden Steuerprogramms bewirken.

4. Vorrichtung nach Anspruch 1, 2 oder 3,
**dadurch gekennzeichnet,**
**dass** die Steuerdaten ein Steuerprogramm umfassen, welches spezifisch für die Steuerung der Sensoreinheit (1) ist,
oder
**dass** die Steuerdaten die Programmteile eines Steuerprogramms umfassen, die spezifisch für die Sensoreinheit (1) sind.

5. Vorrichtung nach Anspruch 1,
**dadurch gekennzeichnet,**
**dass** die Elektronikeinheit (2) derartig ausgestaltet ist, dass die Elektronikeinheit (2) nach einem Erhalten eines Aktivierungsbefehl und/oder nach der Herstellung einer Verbindung zwischen der Elektronikeinheit (2) und der Sensoreinheit (1) die Steuerdaten aus der Speichereinheit (4) ausliest.

6. Vorrichtung nach Anspruch 1,
**dadurch gekennzeichnet,**
**dass** der Mikroprozessor (3) der Elektronikeinheit (2) mindestens eine Schnittstelle (5) für einen Update des Steuerprogramms aufweist.

7. Vorrichtung nach Anspruch 1,
**dadurch gekennzeichnet,**
**dass** die Speichereinheit (4) mindestens eine Kodierung beinhaltet, die eine spezifische Zuordnung der Speichereinheit (4) zur Sensoreinheit (1) erlaubt.

## Claims

1. Modular apparatus designed to determine and/or monitor at least one process variable of a medium,
with at least one sensor unit (1) designed to record the process variable, wherein the sensor unit (1) generates measuring signals,
with at least one electronics unit (2) designed to control the sensor unit (1), wherein the electronics unit (2) has at least one microprocessor,
and
with at least one memory unit (4), which is assigned to the sensor unit (1), and in which control data can be saved,
**characterized in that**
the control data refer specifically to the sensor unit (1) and can be read out by the electronics unit (2),
**in that** in an inactive state the microprocessor (3) of the electronics unit (2) only performs basic functionalities that do not affect the controller of the sensor unit (1)
and
**in that** in an active state the microprocessor (2) controls the sensor unit (1), wherein the microprocessor (3) goes from the inactive to the active state by adopting the control data from the memory unit (4).

2. Apparatus as claimed in Claim 1,
**characterized in that**
the electronics unit (2) is designed in such a way that at least two different sensor units (1) can be controlled by the electronics unit (2),
wherein the sensor units (1) differ from one another **in that** they measure different process variables and/or apply different measuring principles.

3. Apparatus as claimed in Claim 1 or 2,
**characterized in that**
the electronics unit (2) is designed in such a way that control programs for different sensor units (1) and/or different measuring principles are saved in it, and
**in that** the control effectuate the activation of the control program that suits the relevant sensor unit (1).

4. Apparatus as claimed in Claim 1, 2 or 3,
**characterized in that**
the control data comprise a control program which is specifically for the control of the sensor unit (1),
or
**in that** the control data comprise the program parts of a control program that are specifically for the sensor unit (1).

5. Apparatus as claimed in Claim 1,
**characterized in that**
the electronics unit (2) is designed in such a way that following the receipt of an activation command, and/or following the establishment of a connection between the electronics unit (2) and the sensor unit (1), the sensor unit (1) reads the control data out of the memory unit (4).

6. Apparatus as claimed in Claim 1,
**characterized in that**
the microprocessor (3) of the electronics unit (2) has at least one interface for updating the control program.

7. Apparatus as claimed in Claim 1,
**characterized in that**
the memory unit (4) contains at least one code that allows the specific assignment of the memory unit (4) to the sensor unit (1).

## Revendications

1. Dispositif modulaire destiné à la détermination et/ou la surveillance d'au moins une grandeur process d'un produit,
avec au moins une unité de capteur (1) destinée à la mesure de la grandeur process, l'unité de capteur (1) générant des signaux de mesure,
avec au moins une unité électronique (2) destinée à la commande de l'unité de capteur (1), l'unité électrode (2) comportant au moins un microprocesseur,
et
avec au moins une unité de mémoire (4), laquelle est attribuée à l'unité de capteur (1), et dans laquelle peuvent être enregistrées les données de commande,
**caractérisé**
**en ce que** les données de commande se rapportent à l'unité de capteur (1) et sont lisibles par l'unité électronique (2),
**en ce que** le microprocesseur (3) de l'unité électronique (2) exécute dans un état inactivé uniquement les fonctionnalités de base, qui ne concernent pas la commande de l'unité de capteur (1)
et
**en ce que** le microprocesseur (2) commande l'unité de capteur (1) dans un état activé,
le microprocesseur (3) passant de l'état inactivé dans l'état activé en ce que le microprocesseur (3) prend en charge les données de commande provenant de l'unité de mémoire (4).

2. Dispositif selon la revendication 1,
**caractérisé**
**en ce que** l'unité électronique (2) est conçue de telle sorte qu'au moins deux unités de capteur (1) puissent être commandées par l'unité électronique (2), les unités de capteur (1) se distinguant en ce qu'elles mesurent différentes grandeurs process et/ou différents principes de mesure.

3. Dispositif selon la revendication 1 ou 2,
**caractérisé**
**en ce que** l'unité électronique (2) est conçue de telle sorte que des programmes de commande pour différentes unités de capteur (1) et/ou différents principes de mesure y sont enregistrés,
et
**en ce que** les données de commande provoquent l'activation du programme de commande correspondant à l'unité de capteur (1) respective.

4. Dispositif selon la revendication 1, 2 ou 3,
**caractérisé**
**en ce que** les données de commande comprennent un programme de commande, lequel est spécifique à la commande de l'unité de capteur (1),
ou
**en ce que** les données de commande comprennent les parties d'un programme de commande, qui sont spécifiques à l'unité de capteur (1).

5. Dispositif selon la revendication 1,
**caractérisé**
**en ce que** l'unité électronique (2) est conçue de telle sorte que l'unité électronique (2) lit les données de commande à partir de l'unité de mémoire (4) après la réception d'une commande d'activation et/ou après l'établissement d'une liaison entre l'unité électronique (2) et l'unité de capteur (1).

6. Dispositif selon la revendication 1,
**caractérisé**
**en ce que** le microprocesseur (3) de l'unité électronique (2) comporte au moins une interface (5) pour une mise à jour du programme de commande.

7. Dispositif selon la revendication 1,
**caractérisé**
**en ce que** l'unité de mémoire (4) contient au moins un codage permettant une attribution spécifique de l'unité de mémoire (4) à l'unité de capteur (1).
